# EUROPEAN PATENT SPECIFICATION

(11) **EP 2 904 868 B1**
(45) Date of publication and mention of the grant of the patent: **07.12.2016**
(21) Application number: 13780424.1
(22) Date of filing: 07.10.2013
(51) Int. Cl.: H04W 74/08, H04W 76/02

(54) **NODES, SYSTEMS AND METHODS IN A CELLULAR NETWORK**
KNOTEN, SYSTEME UND VERFAHREN IN EINEM ZELLULAREN NETZWERK
NOEUDS, SYSTÈMES ET PROCÉDÉS D'UN RÉSEAU CELLULAIRE

(30) Priority: 08.10.2012 US 201261710954 P
(43) Date of publication of application: 12.08.2015
(73) Proprietor: Telefonaktiebolaget LM Ericsson (publ), 164 83 Stockholm (SE)
(72) Inventor: SHI, Nianshan, S-176 74 Järfälla (SE); FORSSELL, Anders, S-755 91 Uppsala (SE); MANZANO, Francisco, S-113 41 Stockholm (SE); PRADAS, Jose Luis, S-118 27 Stockholm (SE)
(74) Representative: Ericsson
(86) International application number: PCT/SE2013/051177
(87) International publication number: WO 2014/058379

(56) References cited:
- EP-A1- 2 259 619
- WO-A1-2009/123544

## Description

### TECHNICAL FIELD

Embodiments of the present disclosure relate to a node arranged to set up common Enhanced Dedicated Channel resources in a cellular network, the node being for example a Base transceiver station or a Controlling Radio Network Controller.

Embodiments of the present disclosure further relate to a method and system for setting up common Enhanced Dedicated Channel resources in a cellular network.

### BACKGROUND

A network according to standard like 3GPP comprises a Core Network, CN, Radio Access Networks, RAN, and User Equipments, UE, attached to a RAN, such as the UMTS Terrestrial Radio Access Network, UTRAN, architecture.

In a typical cellular radio system, wireless terminals communicate via a radio access network, RAN, with one or more core networks. The wireless terminals can be mobile stations or other types of user equipment, UE, such as portable, pocket, hand-held, computer-included, or carmounted mobile devices which communicate voice and/or data with radio access network, e.g., mobile telephones and laptops with wireless capability.

The RAN covers a geographical area which is divided into cell areas, with each cell area or group of cell areas being served by a radio access node. A cell is a geographical area where radio coverage is provided by equipment at the radio access node. Each cell is identified by an identity within the local radio area. The radio access nodes communicate over the air interface with the UE within the cells served by the node.

The Universal Mobile Telecommunications System, UMTS, is a third generation mobile communication system, which evolved from the Global System for Mobile Communications, GSM, and is intended to provide improved mobile communication services based on Wideband Code Division Multiple Access , WCDMA, access technology. UTRAN is essentially a radio access network using wideband code division multiple access for user equipment units, UEs.

In 3GPP Release 8, Enhanced Uplink in CELL_FACH was introduced to improve the end user performance of the CELL_FACH state. E-DCH is used as the uplink transport channels providing much higher bandwidth for UEs in CELL_FACH state. There is a common pool of E-DCH (Enhanced Dedicated Channel) resources (referred as "common E-DCH resources.") shared by the Enhanced Uplink CELL FACH users, while each user would get an E-RNTI (Enhanced Dedicated Channel Radio Network Transaction Identifier) when accessing the common E-DCH (Enhances Dedicated Channel) resources.

In current specifications the common E-DCH (Enhanced Dedicated Channel) configurations are set up with NBAP (Node B Application Part) messages. An E-RNTI (Enhanced Dedicated Channel Radio Network Transaction Identifier) list is managed by the Node-B, however, it is RNC who grants the CELL_FACH E-RNTI and RNC send it to the UE through certain (e.g. cell update, Radio Bearer Reconfiguration) Radio Resource Control Protocol, RRC, messages.

When common E-DCH (Enhanced Dedicated Channel) resource is setting up, in the current specification, Base transceiver station (Node B) would pre allocate E-DCH Radio Network Transaction Identifiers (E-RNTIs) to be used for Cell FACH users and send all the E-RNTI in a list, called E-RNTI List to its CRNC (Controlling Radio Network Controller) in a NBAP "PHYSICAL SHARED CHANNEL RECONFIGURATION RESPONSE" message.

One prior art approach is disclosed in WO 2009/123544 A1, which shows allocation of an enhanced dedicated channel radio network temporary identifier (E-RNTI) to a user equipment in a cell forward access channel (Cell_FACH) state. Information regarding a state change of the user equipment is received and the E-RNTI can be released due to the state change such that the E-RNTI may be used by another user equipment.

Another prior art approach is disclosed in EP 2 259 619 A1, which shows a method for scheduling data of a base station. A high speed downlink shared channel (HS-DSCH) data frame received and a radio network temporary identifier (E-RNTI) of a mobile station is acquired according to the HS-DSCH data frame. If it is determined that the mobile station occupies a common E-DCH resource according to the E-RNTI, data in the HS-DSCH data frame is scheduled continuously.

One object of the embodiments of the disclosure is to improve communication in a Radio Access Networks, RAN.

### SUMMARY

This has in accordance with a first embodiment been achieved by means of a base transceiver station, node B, arranged to set up common Enhanced Dedicated Channel, E-DCH, resources in a cellular network. The node B is arranged to configure the common E-DCH resources. The configuration of the common E-DCH resources comprises deciding at least one E-DCH Radio Network Transaction Identifier, E-RNTI, range for the common E-DCH resources and to send the at least one E-RNTI range for the common E-DCH resources to a Controlling Radio Network Controller, CRNC, so as to set up the common E-DHC resources.

One advantage with this embodiment is that the base transceiver station, node B, decides the E-RNTIs for the common E-DCH resources. The Controlling Radio Network Controller does not need to confirm this decision.

Further, as the base transceiver station, node B, sends the at least one E-RNTI range for the common E-DCH resources to the Controlling Radio Network Controller, CRNC, the amount of information sent to the CRNC is independent of the number of E-RNTIs within the range. Accordingly, the amount of information sent to the CRNC is independent of the number E-DCH Cell FACH users.

Further, Node B Application Part, NBAP, efficiency can be improved.

In one option, each at least one range comprises two values representing the start and end of the E-RNTI value for the common E-DCH resources.

In one option, node B is arranged to send the at least one E-RNTI range in a Node B Application Part, NBAP, message. In one example, the node B is arranged to send the at least one E-RNTI range in a NBAP message as new protocol Information Elements (IEs).

In one option, the node B comprises a processor arranged to configure the common E-DCH resources comprising deciding the at least one E-RNTI ranges for the common E-DCH resources to use, a memory arranged to store information about the decided E-RNTI ranges for the common E-DCH resources to use, and communication circuitry arranged to send the at least one range of the E-RNTI for the common E-DCH resources to the CRNC.

One embodiment of the present disclosure relates to a system for setting up common Enhanced Dedicated Channel (E-DCH) resources in a cellular network. The system comprises at least one base transceiver station, node B, and at least one controlling Radio Network Controller, CRNC. The at least one node B is arranged to configure the common E-DCH resource comprising deciding at least one E-DCH Radio Network Transaction Identifier, E-RNTI, range for the common E-DCH resources to use and to send the at least one E-RNTI range for the common E-DCH resources to its CRNC, so as to set up the common E-DHC resources. Each range may comprise two values representing the start and end of the E-RNTI value for the common E-DCH resources.

At least one node B is in one option arranged to send the at least one E-RNTI ranges in a Node B Application Part, NBAP, message as new protocol information elements (IEs).

At least one node B comprisesin one option a processor arranged to configure the common E-DCH resource comprising deciding the at least one E-RNTI range for the common E-DCH resources to use, a memory arranged to store information about the decided at least one E-RNTI range for the common E-DCH resources to use, and communication circuitry arranged to send the at least one E-RNTI range for the common E-DCH resources to the CRNC.

In one option, the CRNC is arranged to receive the range of the E-RNTI for the common E-DCH resources provided by the node B and to allocate the E-RNTI within the at least one range provided by the node B for the common E-DCH users.

In one option, the CRNC comprises communication circuitry arranged to receive the at least one E-RNTI range for the common E-DCH resources provided by the node B and a processor arranged to allocate the E-RNTI within the at least one range for the common E-DCH users provided by the node B.

In one option, the cellular network is a UMTS Terrestrial Radio Access Network (UTRAN).

One embodiment of the present disclosure also relates to a method in a cellular network for setting up common Enhanced Dedicated Channel, E-DCH, resources. The method comprises performing at a node B the steps of configuring the common E-DCH resource comprising deciding at least one E-DCH Radio Network Transaction Identifier, E-RNTI, range for the common E-DCH resources to use and sending the at least one E-RNTI range for the common E-DCH resources to a Controlling Radio Network Controller, CRNC.

In one option, the at least one range comprises each two values representing the start and end of the E-RNTI value for the common E-DCH resources.

In one option, the method comprises performing at the CRNC the steps of receiving the at least one E-RNTI range for the common E-DCH resources provided by the node B and allocating the E-RNTI within the at least one range provided by the node B for the common E-DCH users.

One embodiment of the present disclosure relates to a controlling Radio Network Controller, CRNC, arranged to set up common Enhanced Dedicated Channel, E-DCH, resources in a cellular network. The CRNC is arranged to configure the common E-DCH resources. The configuration comprises pre-deciding at least one E-DCH Radio Network Transaction Identifier, E-RNTI, range for the common E-DCH resources and informing a Base transceiver station, node B, about the pre-decided at least one range for the common E-DCH resources.

One advantage with this embodiment is that the amount of information sent from the CRNC to Node B is independent of the number of E-RNTIs within the range. Accordingly, the amount of information sent to the CRNC is independent of the number E-DCH Cell FACH users.

One embodiment of the present disclosure relates to a system for setting up common Enhanced Dedicated Channel, E-DCH, resources in a cellular network. The system comprises at least one Base transceiver station, node B, and at least one controlling Radio Network Controller, CRNC. The at least one CRNC is arranged to configure the common E-DCH resources. The configuration comprises pre-deciding at least one E-DCH Radio Network Transaction Identifier, E-RNTI, range for the common E-DCH resources and to inform a Base transceiver station, node B, about the at least one E-RNTI range for the common E-DCH resources. The node B is then arranged to coordinate the at least one E-RNTI range for the common E-DCH resources decided by the CRNC and an E-DCH Radio Network Transaction, E-RNTI, for Cell Dedicated Channel, DCH, users and based thereon determine whether the at least one E-RNTI range for the common E-DCH resources pre-decided by the CRNC is acceptable.

In one option, the node B is arranged to accept the at least one range without responding to the CRNC when the at least one E-RNTI range for the common E-DCH resources is determined to be acceptable.

In one option, the node B is arranged to actively confirm the at least one range in a response to the CRNC when the at least one E-RNTI range for the common E-DCH resources is determined to be acceptable.

In one option, the node B is arranged to provide at least one proposed new E-RNTI range for the common E-DCH resources and to comprise the at least one proposed new range in a response to the CRNC when the at least one E-RNTI range for the common E-DCH resources is determined not to be acceptable.

One embodiment of the present disclosure relates to a method for setting up common Enhanced Dedicated Channel, E-DCH, resources. The method comprises configuring at a Controlling Radio Network Controller, CRNC, the common E-DCH resource, said configuring comprising pre-deciding at least one E-DCH Radio Network Transaction, E-RNTI, range for the common E-DCH resources to use, and sending the at least one E-RNTI range for the common E-DCH resources to a Base transceiver station node B.

In one option, the method further comprises a step of receiving at the CRNC a response from the node B to the sent at least one E-RNTI range for the common E-DCH resources. The response may be a confirmation message. Alternatively, the response may comprise a proposed new range.

In one option, the method comprises steps of receiving at the node B the pre-decided at least one E-RNTI range for the common E-DCH resources provided by the CRNC, and evaluating at node B the received pre-decided at least one range, and based on the evaluation determining the at least one E-RNTI range for the common E-DCH resources.

In one option, the method further comprising a step of node B transmitting a confirmation response to the CRNC based on the evaluation.

In one option, node B forms at least one proposed new range based on the evaluation and transmits the proposed at least one new range to the CRNC.

### BRIEF DESCRIPTION OF THE DRAWINGS

Fig 1 is a block diagram of an example of a network.
Fig 2 is a flow chart illustrating a method performed at node B for setting up common E-DCH resource in accordance with a first solution.
Fig 3 is a flow chart illustrating a method performed at CRNC for setting up common E-DCH resource in accordance with said first solution.
Fig 4 is a flow chart illustrating a method performed at node B for setting up common E-DCH resource in accordance with a second solution.
Fig 5 is a flow chart illustrating a method performed at CRNC for setting up common E-DCH resource in accordance with said second solution.
Fig 6 is a block diagram schematically illustrating an example of a node B in the network of Fig 1.
Fig 7 is a block diagram schematically illustrating an example of a CRNC in the network of Fig 1.

### DETAILED DESCRIPTION

A network according to standard like 3GPP comprises a Core Network, CN, Radio Access Networks, RAN, and User Equipments, UE, attached to a RAN, such as the UMTS Terrestrial Radio Access Network, UTRAN, architecture.

In a typical cellular radio system, wireless terminals communicate via a radio access network, RAN, with one or more core networks. The wireless terminals can be mobile stations or other types of user equipment, UE, such as portable, pocket, hand-held, computer-included, or car-mounted mobile devices which communicate voice and/or data with radio access network, e.g., mobile telephones and laptops with wireless capability.

The RAN covers a geographical area which is divided into cell areas, with each cell area or group of cell areas being served by a radio access node. A cell is a geographical area where radio coverage is provided by equipment at the radio access node. Each cell is identified by an identity within the local radio area. The radio access nodes communicate over the air interface with the UE within the cells served by the node.

The Universal Mobile Telecommunications System, UMTS, is a third generation mobile communication system, which evolved from the Global System for Mobile Communications, GSM, and is intended to provide improved mobile communication services based on Wideband Code Division Multiple Access, WCDMA, access technology. UTRAN is essentially a radio access network using wideband code division multiple access for user equipment units, UEs.

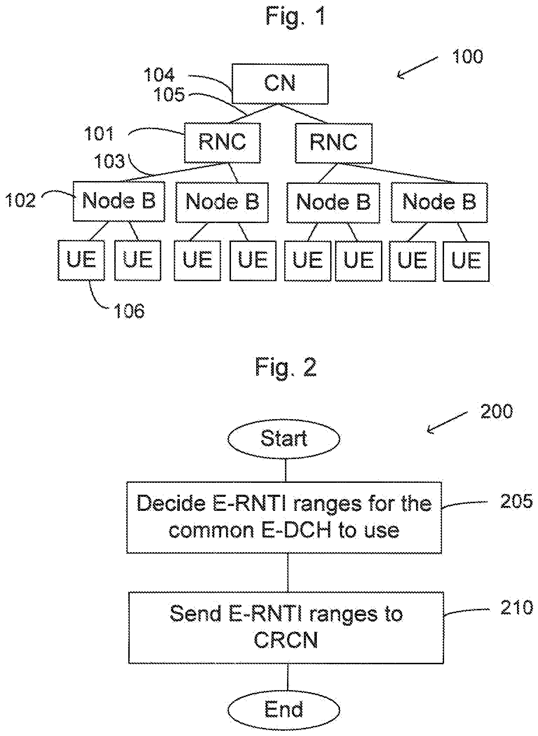

Fig 1 shows an exemplary network 100 like this, wherein the UTRAN comprises one or more Radio Network Controllers, RNCs, 101 and one or more Node B 102 (Radio Base Stations). The one or more Node B 102 is connected to the RNC 101 through an interface 103. The interface is denoted lub. A controlling Radio Network Controller, CRNC, (not specifically shown) is the RNC responsible for the configuration of a particular Node B. Thus, a User Equipment, UE, 106 accessing the system will send an access message to a Node B, which in turn will forward this message on to its CRNC. The UTRAN connects to the Core Network 104 through an interface 105. This interface is denoted lu. The UTRAN and the Core Network provide communication and control for a plurality of User Equipment.

In 3GPP Release 8, Enhanced Uplink, CELL_FACH (CELL Forward Access Channel) was introduced to improve the end user performance of the CELL_FACH state. E-DCH is used as the uplink transport channels providing much higher bandwidth for UEs in CELL_FACH state. There is a common pool of E-DCH resources (referred as "common E-DCH resources.") shared by the Enhanced Uplink CELL FACH users, while each user would get an E-RNTI when accessing the common E-DCH (Enhances Dedicated Channel) resources.

In current specifications the common E-DCH (Enhanced Dedicated Channel) configurations are set up with NBAP (Node B Application Part) messages. An E-RNTI (Enhanced Dedicated Channel Radio Network Transaction Identifier) list is managed by the Node-B, however, it is RNC who grants the CELL_FACH E-RNTI and RNC send it to the UE through certain (e.g. cell update, Radio Bearer Reconfiguration) Radio Resource Control Protocol, RRC, messages.

When common E-DCH (Enhanced Dedicated Channel) resource is setting up, in the current specification, Base transceiver station (Node B) would pre allocate E-DCH Radio Network Transaction Identifiers, E-RNTIs, to be used for Cell FACH users and send all the E-RNTI in a list, called E-RNTI List to its CRNC (Controlling Radio Network Controller) in a NBAP "PHYSICAL SHARED CHANNEL RECONFIGURATION RESPONSE" message.

E-RNTI is defined as 16bits. Thanks to the deployment of smart phones, the number of Sending of PHYSICAL SHARED CHANNEL RECONFIGURATION RESPONSE with hundreds and thousands of E-RNTI in the list would prior art solutions imply a high load on the system and a potential overload, e.g. NBAP congestion.

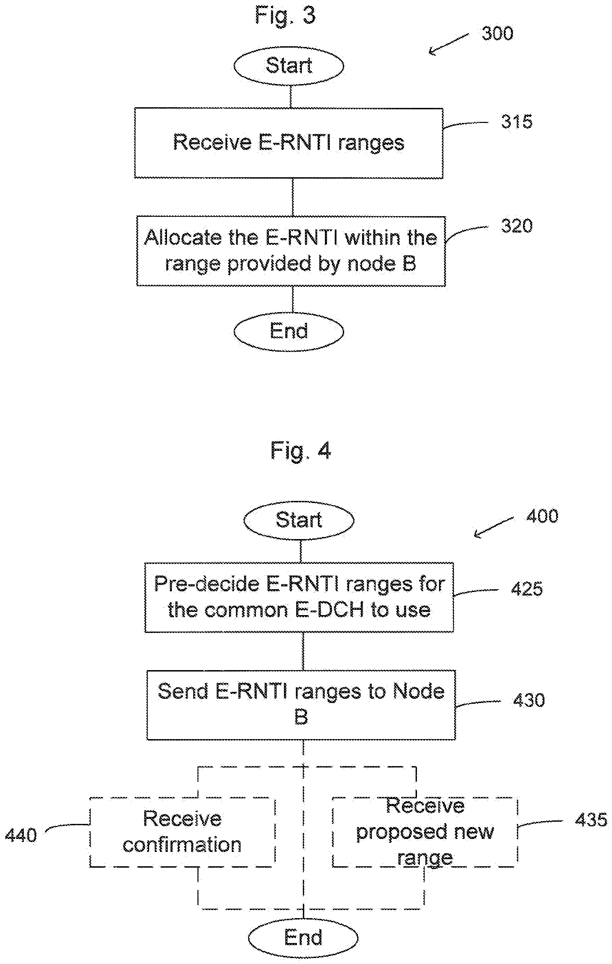

In Figs 2 and 3, one examplified first solution, denoted solution A, is based on that Node B decides the E-RNTI ranges for the common E-DCH resources to use. Node B sends then in one example the E-RNTI ranges in NBAP message. In one example, Node B sends the E-RNTI ranges in NBAP message as new protocol information elements (IEs). The ranges comprise for example each two values representing the start and end of the E-RNTI value for the common E-DCH resources. The E-RNTI ranges are in one example defined as for example as Common E-DCH E-RNTI Start, and Common E-DCH E-RNTI End, said two values indicating E-RNTIs between these two values can be used for common E-DCH E-RNTI. In one example, the new IE is defined in the existing NBAP message PHYSICAL SHARED CHANNEL RECONFIGURATION RESPONSE.

In one example, Node B decides one E-RNTI range. In an alternative example, Node B decides a plurality of E-RNTI ranges. Accordingly, a list comprising one or a plurality of E-RNTI ranges may be introduced, for use by the CRNC. Alternatively, the list is introduced in other NBAP common message, or new message. Instead, or in addition thereto the list is on one example introduced in lub user plan frames.

In Fig 2, a method 200 performed at a base transceiver station (node B) for setting up common Enhanced Dedicated Channel (E-DCH) resource comprises in one example
- configuring 205 the common E-DCH resource comprising deciding at least one E-DCH Radio Network Transaction Identified (E-RNTI) range for the common E-DCH resources to use and
- sending 210 the least one range of the E-RNTI for the common E-DCH resources to a controlling Radio Network Controller (CRNC).

In one option, the at least one range comprises two values representing the start and end of the E-RNTI value for the common E-DCH resources.

In Fig 3 a method 300 performed at a controlling Radio Network Controller (CRNC) for setting up common Enhanced Dedicated Channel (E-DCH) resources comprises in one example
- receiving 315 at least one E-DCH Radio Network Transaction Identifier (E-RNTI) range for the common E-DCH resources provided by a base transceiver station (Node B) and
- allocating 320 the E-RNTI within the at least one E-RNTI range provided by Node B for the common E-DCH users.

The tables 1 and 2 below illustrate an example wherein the new IE is defined in the existing NBAP message PHYSICAL SHARED CHANNEL RECONFIGURATION RESPONSE. Table 1 illustrates an example of Common E-DCH System Information Response included in PHYSICAL SHARED CHANNEL RECONFIGURATION RESPONSE. It provides information for E-DCH configured for UE in Cell_FACH and Idle state that have been established or modified.

**Table 1: E-RNTI Range is introduced in Common E-DCH System Information Response**

| **IE/Group Name** | **Presence** | ***Range*** | **IE Type and Reference** | **Semantics Description** | **Criticality** | **Assigned Criticality** |
|---|---|---|---|---|---|---|
| **UL Common MAC Flow Specific Information Response** | | *1*..><*m axnoof Comm onMA CFlows* » | | | - | |
| >UL Common MAC Flow ID | M | | Common MAC Flow ID 9.2.2.79 | | - | |
| >Binding ID | O | | 9.2.1.4 | | - | |
| >Transport Layer Address | O | | 9.2.1.63 | | - | |
| Serving Grant Value | M | | INTEGER (0..37,38) | (0..37) indicates E-DCH serving grant index as defined in TS 25.321 [32]; Index 38 is not allowed | - | |
| E-RNTI List | O | | 9.2.2.139 | The Node B shall not allocate any E-RNTIs listed in this IE for a UE | YES | ignore |
| UE Status Update Confirm Indicator | O | | BOOLEAN | TRUE means that the Node B supports UE Status Update Confirmation Procedure | YES | ignore |
| **E-RNTI Range** | **O** | | **E-RNTI Range** | | **YES** | **ignore** |

Table 2 illustrates an example of *E-RNTI Range* IE providing the range of E-RNTIs which can be allocated by CRNC when sent by Node B; it provides the range of E-RNTI used by CRNC when sent by CRNC.

**Table 2: E-RNTI Range is defined with Common E-DCH Start and Common E-DCH End**

| **IE/Group Name** | **Presence** | **Range** | **IE Type and Reference** | **Semantics Description** |
|---|---|---|---|---|
| Common E-DCH Start | M | | 9.2.1.75 | |
| Common E-DCH End | M | | 9.2.1.75 | |

Table 3 below illustrates the introduction of a list of ranges, which can be used by CRNC E-RNTI Range. In the illustrated example, the *E-RNTI Range* IE provides the list of ranges of E-RNTIs which can be allocated by CRNC when sent by Node B; it provides the range of E-RNTI used by CRNC when sent by CRNC.

**Table 3: E-RNTI Range is defined with a list of ranges**

| **IE/Group Name** | **Presence** | **Range** | **IE Type and Reference** | **Semantics Description** |
|---|---|---|---|---|
| **E-RNTI Range** | | *1..<max noofERN TIRanges*> | | |
| >Common E-DCH Start | M | | 9.2.1.75 | |
| >Common E-DCH End | M | | 9.2.1.75 | |

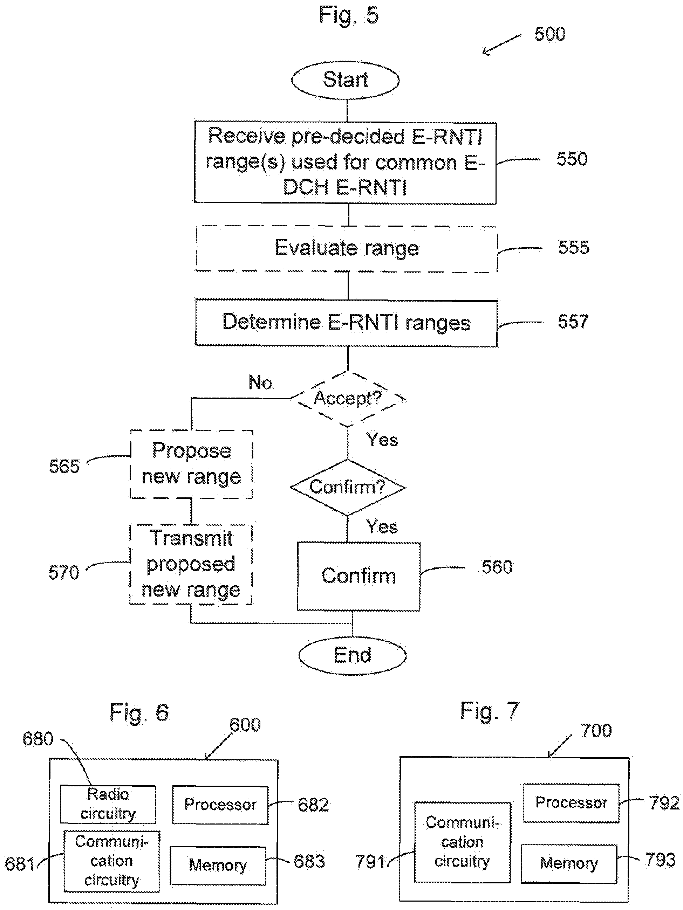

In Figs 4 and 5, one examplified second solution, denoted solution B, is based on that CRNC pre-decides the E-RNTI ranges for the common E-DCH resources. In one example the CRNC is arranged to send the E-RNTI ranges in NBAP message as new IE. This message indicates to Node B that the E-RNTI within the range will be used for common E-DCH E-RNTI by CRNC.

Node B has a few options for the handling. In a first option, Node B is arranged to do nothing, indicating the range is accepted and understood. In a second option, Node B is arranged to actively confirm to the CRNC indicating that the range is received and understood. In a third option Node B is arranged to propose a new range.

In one example, the new IE is defined in the existing NBAP message PHYSICAL SHARED CHANNEL RECONFIGURATION REQUEST. In one example, the new IE is introduced in other NBAP common message, or new message. In one example, the new IE is introduced in lub user plan frames.

In Fig 4 a method performed at a controlling Radio Network Controller (CRNC) for setting up common Enhanced Dedicated Channel (E-DCH) resources comprises in one example
- configuring 425 the common E-DCH resources comprising pre-deciding at least one E-DCH Radio Network Transaction Identifier (E-RNTI) range for the common E-DCH resources to use and
- sending 430 at least one E-RNTI range for the common E-DCH resources to the CRNC.

In one option, the method also involves receiving 435, 440 at the CRNC a response from Node B to the sent range of the E-RNTI for the common E-DCH resources. In one example the response 440 is a confirmation message. In an alternative example, the response 435 comprises at least one proposed new range. In yet another example, no response is received. In Fig 5, a method performed at a base transceiver station (node B) for setting up common Enhanced Dedicated Channel (E-DCH) resources comprises in one example
- receiving 550 at least one pre-decided E-DCH Radio Network Transaction Identifier (E-RNTI) range for the common E-DCH resources provided by a controlling Radio Network Controller (CRNC).

In one option, the method comprises the steps of evaluating 555 the received pre-decided range. Node B transmits in one example a confirmation response 560. The confirmation response may be based on the evaluation. Node B forms 565 in one example at least one proposed new range based on the evaluation, and transmits 570 the proposed at least one new range to the CRNC.

The tables 1 and 2 above and 4 below illustrate an example wherein the new IE is defined in the existing NBAP message PHYSICAL SHARED CHANNEL RECONFIGURATION REQUEST.

Table 4 below illustrates the Common E-DCH System Information which is included in PHYSICAL SHARED CHANNEL RECONFIGURATION REQUEST.

**Table 4: E-RNTI Range is introduced in Common E-DCH System Information**

| **IE/Group Name** | **Presence** | **Range** | **IE Type and Reference** | **Semantics Description** | **Criticality** | **Assigned Criticality** |
|---|---|---|---|---|---|---|
| **Common E-DCH UL DPCH Information** | | *0..1* | | | - | |
| >UL SIR Target | M | | ULSIR 9.2.1.67A | | - | |
| >DPC Mode | O | | 9.2.2.13C | If received, this IE shall be ignored. DPC mode 0 shall be applied for Common E-DCH(see ref. TS 25.214 [10]). | - | |
| **Common E-DCH E-DPCH Information** | | 0..1 | | | - | |
| >Maximum Set of E-DPDCHs | M | | 9.2.2.20C | | - | |
| >Puncture Limit | M | | 9.2.1.50 | | - | |
| >E-TFCS Information | M | | 9.2.2.13Dh | | - | |
| >E-TTI | M | | 9.2.2.13Di | | - | |
| >E-DPCCH Power Offset | M | | 9.2.2.13Dj | | - | |
| >E-RGCH 2-Index-Step Threshold | O | | 9.2.2.13lg | | - | |
| >E-RGCH 3-Index-Step Threshold | O | | 9.2.2.13lh | | - | |
| >HARQ Info for E-DCH | M | | 9.2.2.18ba | | - | |
| **Common E-DCH Information** | | *0..1* | | | - | |
| >E-DCH Reference Power Offset | O | | 9.2.2.13Y | | - | |
| >E-DCH Power Offset for Scheduling Info | O | | 9.2.1.85 | | - | |
| >Maximum E-DCH resource allocation for CCCH | M | | ENUMERATE D (8, 12, 16, 24, 32, 40, 80, 120,..., 20) | Interms of TTIs, Value 120 should not be used | - | |
| >Maximum period for collision resolution phase | M | | INTEGER(8..2 4,...) | Interms of TTIs | - | |
| >Maximum TB Sizes | O | | 9.2.2.106 | | - | |
| >Common E-DCH implicit release indicator | M | | BOOLEAN | TRUE means implicit release is in use. FALSE means implicit release is not in use. | - | |
| >Common E-DCH Additional Transmission Back Off | O | | INTEGER (0..15,...) | | YES | ignore |
| **Common E-DCH HS-DPCCH Information** | | *0..1* | | | - | |
| >ACK-NACK Repetition Factor | M | | 9.2.2.a | | - | |
| >ACK Power Offset | M | | 9.2.2.b | | - | |
| >NACK Power Offset | M | | 9.2.2.23a | | - | |
| **>Common E-DCH CQI Information** | O | | | | - | |
| >>CQI Feedback Cycle k | M | | 9.2.2.21B | | - | |
| >>CQI Repetition Factor | C-CQICycle k | | 9.2.2.4Cb | | - | |
| >>CQI Power Offset | M | | 9.2.2.4Ca | | - | |
| >>Measurement Power Offset | M | | 9.2.2.21C | | - | |
| **Common E-DCH Preamble Control Information** | | *0..1* | | | - | |
| >Common Physical Channel ID | M | | 9.2.1.13 | | - | |
| >Common E-DCH Preamble Signature | M | | Preamble Signatures 9.2.2.31 | | - | |
| >Scrambling Code Number | M | | 9.2.2.42 | | - | |
| >Preamble Threshold | M | | 9.2.2.32 | | - | |
| >E-Al Indicator | O | | BOOLEAN | TRUE means E-Als are in use on the AICH. FALSE means E-Als are not in use on the AICH. | - | |
| **>Common E-DCH** | | *0..1* | | | - | |
| **AICH Information** | | | | | | |
| >>Common Physical Channel ID | M | | 9.2.1.13 | | - | |
| >>AICH Transmission Timing | M | | 9.2.2.1 | | - | |
| >>FDD DL Channelisation Code Number | M | | 9.2.2.14 | | - | |
| >>AICH Power | M | | 9.2.2.D | | - | |
| >>STTD Indicator | M | | 9.2.2.48 | | - | |
| **Common E-DCH F-DPCH Information** | | 0..1 | | | - | |
| >F-DPCH slot format | M | | 9.2.2.93 | | - | |
| >FDD TPC DL Step Size | M | | 9.2.2.16 | | - | |
| >Initial DL Transmission Power | O | | DL Power 9.2.1.21 | Initial power on F-DPCH | YES | ignore |
| >Maximum DL Power | O | | DL Power 9.2.1.21 | Maximum allowed power on F-DPCH | YES | ignore |
| >Minimum DL Power | O | | DL Power 9.2.1.21 | Minimum allowed power on F-DPCH | YES | ignore |
| Common E-DCH E-AGCH Channelisation Code Number | O | | FDD DL Channelisatio n Code Number 9.2.2.14 | | - | |
| **Common E-DCH Resource Combination Information** | | *0..<ma xnoofC ommo nEDCH s*> | | | - | |
| >Soffset | M | | INTEGER (0..9,...) | | - | |
| >F-DPCH DL Code Number | M | | FDD DL Channelisatio n Code Number 9.2.2.14 | | - | |
| >UL DPCH Scrambling Code | M | | UL Scrambling Code 9.2.2.59 | | - | |
| >E-RGCH/E-HICH Channelisation Code | M | | FDD DL Channelisatio n Code Number 9.2.2.14 | | - | |
| >E-RGCH Signature Sequence | O | | INTEGER (0..maxnoofSi gSeqE-RGHICH-1) | | - | |
| >E-HICH Signature Sequence | M | | INTEGER (O..maxnoofSi gSeqE-RGHICH-1) | | - | |
| **UL Common MAC Flow Specific Information** | | *0..<ma xnoofC ommo nMAC Flows>* | | | - | |
| >UL Common MAC Flow ID | M | | Common MAC Flow ID 9.2.2.79 | | - | |
| >Transport Bearer Request Indicator | M | | 9.2.1.62A | | - | |
| >Binding ID | O | | 9.2.1.4 | Shall be ignored if bearer establishment with ALCAP. | - | |
| >Transport Layer Address | O | | 9.2.1.63 | Shall be ignored if bearer establishment with ALCAP. | - | |
| >TNL QoS | O | | 9.2.1.58A | Shall be ignored if bearer establishment with ALCAP. | - | |
| >Payload CRC Presence Indicator | M | | 9.2.1.49 | | - | |
| >Bundling Mode Indicator | O | | 9.2.2.1Bb | | - | |
| >Common E-DCH MAC-d Flow Specific Information | M | | 9.2.2.105 | | - | |
| E-RNTI List Request | O | | NULL | | YES | ignore |
| **E-RNTI Range** | **O** | | **E-RNTI Range** | | **YES** | **ignore** |

With the above described solutions A and B, the NBAP efficiency is improved in the handling of common E-DCH resources in PHYSICAL SHARED CHANNEL RECONFIGURATION RESPONSE. Further, with the above described solutions, RNC control of E-RNTI allocation for common E-DCH users is improved.

In Fig 6, a base transceiver station (Node B) 600 comprises radio circuitry 680 to communicate with served User Equipment (Ues), communication circuitry 681 to communicate with other radio network and core network nodes, memory 683 to store information, and a processing unit 682. The memory 681 is configured to store information about served UEs, as well as information about neighbor cells.

In accordance with solution A, the processor 682 is arranged to configure common Enhanced dedicated channel (E-DCH) resource comprising deciding E-DCH Radio Network Transaction Identifier (E-RNTI) ranges for the common E-DCH resources to use. The memory is arranged to store information about the decided E-RNTI ranges for the common E-DCH resources to use. The communication circuitry 681 is arranged to send at least one range of the E-RNTI for the common E-DCH resources to a controlling Radio Network Controller (CRNC).

In accordance with solution B, the communication circuitry 681 is arranged to receive 550 at least one pre-decided range of the E-RNTI for the common E-DCH resources provided by CRNC. The at least one pre-decided range of the E-RNTI for the common E-DCH resources is stored in the memory 683. In one option, processor 682 is arranged to evaluate the received pre-decided at least one range. In one example, the communication circuitry 681 is arranged to transmit a confirmation response 560 to the CRNC. The confirmation response may be based on the evaluation. In one example, the processor 682 is arranged to form at least one proposed new range based on the evaluation, and the communication circuitry is arranged to transmit the proposed new range to the CRNC.

In Fig 7, a controlling Radio Network Controller (CRNC) 700 comprises communication circuitry 791 to communicate with other radio network and core network nodes, memory 793 to store information, and a processing unit 792.

In accordance with solution A, the communication circuitry 791 is arranged to receive at least one range of E-DCH Radio Network Transaction Identifier (E-RNTI) for a common Enhanced Dedicated Channel) E-DCH resources provided by a base transceiver station (Node B). The processor 792 is arranged to allocate the E-RNTI within the range provided by Node B for the common E-DCH users.

In accordance with solution B, the processor 792 is arranged to configure the common E-DCH resource. The configuration comprises pre-deciding the E-RNTI ranges for the common E-DCH resources to use. Further, the communication circuitry 791 is arranged to send at least one range of the E-RNTI for the common E-DCH resources to the CRNC. In one option, the communication circuitry 791 is also arranged to receive a response from Node B to the sent at least one range of the E-RNTI for the common E-DCH resources. In one example the response is a confirmation message. In an alternative example, the response comprises at least one proposed new range.

In the above description, the specific terms such as Node B, CRNC and UE are used herein, but it should be understood that other terms may be used in different standards or protocols to refer to the same or like entities.

Abbreviations:
- 3GPP: 3^{rd} Generation Partnership Project
- CCCH: Common Control Channel
- DCCH: Dedicated Control Channel
- DCH: Dedicated Channel
- DTCH: Dedicated Traffic Channel
- E-DCH: Enhanced Dedicated Channel
- FACH: Forward Access Channel
- RACH: Random Access Channel
- RLC: Radio Link Control
- RRC: Radio Resource Control Protocol
- UE: User Equipment
- FDD: Frequency Division Duplexing
- UTRA: UMTS Terrestrial Radio Access
- NODE B: Base transceiver station
- RNC: Radio Network Controller
- CRNC: Controlling RNC
- NBAP: Node B Application Part
- RNSAP: Radio Network Subsystem Application Part
- lur: The interface between RNCs in the same network
- lub: The interface between the RNC and the Node B
- E-RNTI: E-DCH Radio Network Transaction Identifier

## Claims

1. A base transceiver station, node B, (102; 600) arranged to set up common Enhanced Dedicated Channel, E-DCH, resources in a cellular network (100), wherein the node B is arranged to
- configure the common E-DCH resources comprising deciding at least one E-DCH Radio Network Transaction Identifier, E-RNTI, range for the common E-DCH resources, and
- send the at least one E-RNTI range for the common E-DCH resources to a Controlling Radio Network Controller, CRNC (101; 700)
so as to set up the common E-DHC resources.

2. A node B (102; 600) according to claim 1, wherein each at least one range comprises two values representing the start and end of the E-RNTI value for the common E-DCH resources.

3. A node B (102; 600) according to any of the preceding claims arranged to send the at least one E-RNTI range in a Node B Application Part, NBAP, message.

4. A node B (102; 600) according to claim 3 arranged to send the at least one E-RNTI range in a NBAP message as new protocol information elements (IEs).

5. A node B (102; 600) according to any of the preceding claims, comprising
- a processor (682) arranged to configure the common E-DCH resources comprising deciding the at least one E-RNTI ranges for the common E-DCH resources to use,
- a memory (683) arranged to store information about the decided E-RNTI ranges for the common E-DCH resources to use, and
- communication circuitry (681) arranged to send the at least one range of the E-RNTI for the common E-DCH resources to the CRNC (101; 700).

6. A system for setting up common Enhanced Dedicated Channel, E-DCH, resources in a cellular network, said system comprising at least one base transceiver station, node B, (102; 600) and at least one controlling Radio Network Controller, CRNC, (101; 700) wherein the at least one node B (102; 600) is arranged to configure the common E-DCH resource comprising deciding at least one E-DCH Radio Network Transaction Identifier, E-RNTI, range for the common E-DCH resources to use and to send the at least one E-RNTI range for the common E-DCH resources to its CRNC (101; 700), so as to set up the common E-DHC resources.

7. A system according to claim 6, wherein each range comprises two values representing the start and end of the E-RNTI value for the common E-DCH resources.

8. A system according to any of the claims 6 - 7 arranged to send the at least one E-RNTI ranges in a Node B Application Part, NBAP, message as new protocol information elements (IEs).

9. A system according to any of the claims 6 - 8, wherein the at least one node B (102; 600) comprises
- a processor (682) arranged to configure the common E-DCH resource comprising deciding the at least one E-RNTI range for the common E-DCH resources to use,
- a memory (683) arranged to store information about the decided at least one E-RNTI range for the common E-DCH resources to use, and
- communication circuitry (681) arranged to send the at least one E-RNTI range for the common E-DCH resources to the CRNC.

10. A system according to any of the claim 6 - 9, wherein the at least one CRNC (101; 700) is arranged to receive the range of the E-RNTI for the common E-DCH resources provided by the node B (101; 700) and to allocate the E-RNTI within the at least one range provided by the node B (102; 600) for the common E-DCH users.

11. A system according to claim 10, wherein the at least one CRNC comprises communication circuitry (791) arranged to receive the at least one E-RNTI range for the common E-DCH resources provided by the node B and a processor (792) arranged to allocate the E-RNTI within the at least one range for the common E-DCH users provided by the node B.

12. A system according to any of the claims 6 - 11, wherein the cellular network (100) is a UMTS Terrestrial Radio Access Network, UTRAN.

13. A method (200, 300) in a cellular network for setting up common Enhanced Dedicated Channel, E-DCH, resources, comprising performing at a node B the steps of
- configuring the common E-DCH resource comprising deciding (205) at least one E-DCH Radio Network Transaction Identifier, E-RNTI, range for the common E-DCH resources to use and
- sending (210) the at least one E-RNTI range for the common E-DCH resources to a Controlling Radio Network Controller, CRNC.

14. A method (200, 300) according to claim 13, the at least one range comprises each two values representing the start and end of the E-RNTI value for the common E-DCH resources.

15. A method (200, 300) according to claim 13 or 14, further comprising performing at the CRNC the steps of
- receiving (315) the at least one E-RNTI range for the common E-DCH resources provided by the node B and
- allocating (320) the E-RNTI within the at least one range provided by the node B for the common E-DCH users.

16. A controlling Radio Network Controller, CRNC, (101; 700) arranged to set up common Enhanced Dedicated Channel, E-DCH, resources in a cellular network (100), wherein the CRNC (101; 700) is arranged to configure the common E-DCH resources comprising pre-deciding at least one E-DCH Radio Network Transaction Identifier, E-RNTI, range for the common E-DCH resources and to inform a Base transceiver station, node B, (102; 600) about the pre-decided at least one range for the common E-DCH resources.

17. A method for setting up common Enhanced Dedicated Channel, E-DCH, resources (400; 500) comprising
- configuring (425) at a Controlling Radio Network Controller, CRNC, the common E-DCH resource, said configuring comprising pre-deciding at least one E-DCH Radio Network Transaction, E-RNTI, range for the common E-DCH resources to use and
- sending (430) the at least one E-RNTI range for the common E-DCH resources to a Base transceiver station, node B.

18. A method according to claim 17, further comprising a step of receiving (435, 440) at the CRNC a response from the node B to the sent at least one E-RNTI range for the common E-DCH resources.

19. A method according to claim 18, wherein the response is a confirmation message or the response comprises a proposed new range.

20. A method according to any of the claims 17-19, further comprising a step of
- receiving (550) at the node B the pre-decided at least one E-RNTI range for the common E-DCH resources provided by the CRNC, and
- evaluating (555) at node B the received pre-decided at least one range, and based on the evaluation determining (557) the at least one E-RNTI range for the common E-DCH resources.

## Patentansprüche

1. Transceiver-Basisstation, Node B, (102; 600), angeordnet zum Aufbauen von gemeinsamen verbesserter-dedizierter-Kanal-, E-DCH-Ressourcen in einem zellularen Netz (100), worin der Node B angeordnet ist zum
- Konfigurieren der gemeinsamen E-DCH-Ressourcen, das Bestimmen mindestens eines E-DCH-Funknetz-Transaktionsidentifikator-, E-RNTI-Bereichs für die gemeinsamen E-DCH-Ressourcen umfassend, und
- Senden des mindestens einen E-RNTI-Bereichs für die gemeinsamen E-DCH-Ressourcen an einen steuernden Funknetzcontroller, CRNC (101; 700), um die gemeinsamen E-DCH-Ressourcen aufzubauen.

2. Node B (102; 600) nach Anspruch 1, worin jeder mindestens ein Bereich zwei Werte umfasst, die den Anfang und das Ende des E-RNTI-Werts für die gemeinsamen E-DCH-Ressourcen repräsentieren.

3. Node B (102; 600) nach einem der vorhergehenden Ansprüche, angeordnet zum Senden des mindestens einen E-RNTI-Bereichs in einer Node B-Anwendungsteil-, NBAP-Nachricht.

4. Node B (102; 600) nach Anspruch 3, angeordnet zum Senden des mindestens einen E-RNTI-Bereichs in einer NBAP-Nachricht als neue Protokoll-Informationselemente (IEs).

5. Node B (102; 600) nach einem der vorhergehenden Ansprüche, Folgendes umfassend:
- einen Prozessor (682), angeordnet zum Konfigurieren der gemeinsamen E-DCH-Ressourcen, umfassend die Bestimmung des mindestens einen E-RNTI-Bereichs für die gemeinsamen E-DCH-Ressourcen zu verwenden,
- einen Speicher (683), angeordnet zum Speichern von Information über die bestimmten E-RNTI-Bereiche für die gemeinsamen E-DCH-Ressourcen zu verwenden, und
- Kommunikationsschaltkreise (681), angeordnet zum Senden des mindestens einen Bereichs des E-RNTI für die gemeinsamen E-DCH-Ressourcen an den CRNC (101; 700).

6. System zum Aufbauen von gemeinsamen E-DCH(verbesserter dedizierter Kanal)-Ressourcen in einem zellularen Netz, wobei das System mindestens eine Transceiver-Basisstation, Node B, (102; 600) und mindestens einen steuernden Funknetzcontroller, CRNC (101; 700) umfasst, worin der mindestens eine Node B (102; 600) zum Konfigurieren der gemeinsamen E-DCH-Ressource angeordnet ist, umfassend die Bestimmung des mindestens einen E-DCH-Funknetz-Transaktionsidentifikator-, E-RNTI-Bereichs für die gemeinsamen E-DCH-Ressourcen zu verwenden, und zum Senden des mindestens einen E-RNTI-Bereichs für die gemeinsamen E-DCH-Ressourcen an seinen CRNC (101; 700), um die gemeinsamen E-DHC-Ressourcen aufzubauen.

7. System nach Anspruch 6, worin jeder Bereich zwei Werte umfasst, die den Anfang und das Ende des E-RNTI-Werts für die gemeinsamen E-DCH-Ressourcen repräsentieren.

8. System nach einem der Ansprüche 6 - 7, angeordnet zum Senden des mindestens einen E-RNTI-Bereichs in einer Node B-Anwendungsteil-, NBAP-Nachricht als neue Protokollinformationselemente (IEs).

9. System nach einem der Ansprüche 6 - 8, worin der mindestens eine Node B (102; 600) Folgendes umfasst:
- einen Prozessor (682), angeordnet zum Konfigurieren der gemeinsamen E-DCH-Ressource, umfassend die Bestimmung des mindestens einen E-RNTI-Bereichs für die gemeinsamen E-DCH-Ressourcen zu verwenden,
- einen Speicher (683), angeordnet zum Speichern von Information über den bestimmten mindestens einen E-RNTI-Bereich für die gemeinsamen E-DCH-Ressourcen zu verwenden, und
- Kommunikationsschaltkreise (681), angeordnet zum Senden des mindestens einen E-RNTI-Bereichs für die gemeinsamen E-DCH-Ressourcen an den CRNC.

10. System nach einem der Ansprüche 6 - 9, worin der mindestens eine CRNC (101; 700) angeordnet ist zum Empfangen des Bereichs des E-RNTI für die durch den Node B (101; 700) bereitgestellten gemeinsamen E-DCH-Ressourcen und zum Zuweisen des E-RNTI innerhalb des mindestens einen Bereichs, der durch den Node B (102; 600) für die Benutzer des gemeinsamen E-DCH bereitgestellt wird.

11. System nach Anspruch 10, worin der mindestens eine CRNC Kommunikationsschaltkreise (791) umfasst, angeordnet zum Empfangen des mindestens einen E-RNTI-Bereichs für die durch den Node B bereitgestellten gemeinsamen E-DCH-Ressourcen, und einen Prozessor (792), angeordnet zum Zuweisen des E-RNTI innerhalb des mindestens einen Bereichs für die durch den Node B bereitgestellten Benutzer des gemeinsamen E-DCH.

12. System nach einem der Ansprüche 6 - 11, worin das zellulare Netz (100) ein UMTS Terrestrisches Funkzugangsnetz, UTRAN, ist.

13. Verfahren (200, 300) in einem zellularen Netz zum Aufbauen von gemeinsamen verbesserter-dedizierter-Kanal-, E-DCH-Ressourcen, das Ausführen der folgenden Schritte an einem Node B umfassend:
- Konfigurieren der gemeinsamen E-DCH-Ressourcen, umfassend die Bestimmung (205) mindestens eines E-DCH-Funknetz-Transaktionsidentifikator-, E-RNTI-Bereichs für die gemeinsamen E-DCH-Ressourcen zu verwenden, und
- Senden (210) des mindestens einen E-RNTI-Bereichs für die gemeinsamen E-DCH-Ressourcen an einen steuernden Funknetzcontroller, CRNC.

14. Verfahren (200, 300) nach Anspruch 13, wobei der mindestens eine Bereich jeweils zwei Werte umfasst, die den Anfang und das Ende der E-RNTI-Werts für die gemeinsamen E-DCH-Ressourcen repräsentieren.

15. Verfahren (200, 300) nach Anspruch 13 oder 14, das Ausführen der folgenden Schritte am CRNC umfassend:
- Empfangen (315) des mindestens einen E-RNTI-Bereichs für die gemeinsamen E-DCH-Ressourcen, die der Node B bereitstellt, und
- Zuweisen (320) des E-RNTI innerhalb des mindestens einen Bereichs, den der Node B für die Benutzer des gemeinsamen E-DCH bereitstellt.

16. Steuernder Funknetzcontroller, CRNC, (101; 700), angeordnet zum Aufbauen von verbesserter-dedizierter-Kanal-, E-DCH-Ressourcen in einem zellularen Netz (100), worin der CRNC (101; 700) angeordnet ist zum Konfigurieren der gemeinsamen E-DCH-Ressourcen, das Vorbestimmen mindestens eines E-DCH-Funknetz-Transaktionsidentifikator-, E-RNTI-Bereichs für die gemeinsamen E-DCH-Ressourcen umfassend und das Informieren einer Transceiver-Basisstation, Node B, (102; 600) über den vorbestimmten mindestens einen Bereich für die gemeinsamen E-DCH-Ressourcen.

17. Verfahren zum Aufbauen von gemeinsamen verbesserter dedizierter Kanal-, E-DCH-Ressourcen (400; 500), Folgendes umfassend:
- Konfigurieren (425) der gemeinsamen E-DCH-Ressource an einem steuernden Funknetzcontroller, CRNC, wobei das Konfigurieren das Vorbestimmen mindestens eines E-DCH-Funknetz-Transaktionsidentifikator-, E-RNTI-Bereichs für die gemeinsamen E-DCH-Ressourcen zu verwenden umfasst und
- Senden (430) des mindestens einen E-RNTI-Bereichs für die gemeinsamen E-DCH-Ressourcen an eine Transceiver-Basisstation, Node B.

18. Verfahren nach Anspruch 17, außerdem einen Schritt des Empfangens (435, 440) am CRNC einer Antwort vom Node B an den gesendeten mindestens einen E-RNTI-Bereich für die gemeinsamen E-DCH-Ressourcen umfassend.

19. Verfahren nach Anspruch 18, worin die Antwort eine Bestätigungsnachricht ist oder die Antwort einen vorgeschlagenen neuen Bereich umfasst.

20. Verfahren nach einem der Ansprüche 17 - 19, außerdem einen Schritt umfassend:
- des Empfangens (550) am Node B des vorbestimmten mindestens einen E-RNTI-Bereichs für die vom CRNC bereitgesellten gemeinsamen E-DCH-Ressourcen, und
- des Bewertens (555) am Node B des empfangenen vorbestimmten mindestens einen Bereichs, und des Bestimmens (557) des mindestens einen E-RNTI-Bereichs für die gemeinsamen E-DCH-Ressourcen auf der Basis der Bewertung.

## Revendications

1. Station d'émission-réception de base, « Node B », (102 ; 600) agencée de manière à établir des ressources de canal dédié amélioré, E-DCH, commun dans un réseau cellulaire (100), dans lequel la station « Node B » est agencée de manière à :
- configurer les ressources de canal E-DCH commun, y compris déterminer au moins une plage d'identifiant de transaction de réseau radio de canal E-DCH, E-RNTI, pour les ressources de canal E-DCH commun ; et
- envoyer ladite au moins une plage d'identifiant E-RNTI pour les ressources de canal E-DCH commun à un contrôleur de réseau radio de commande, CRNC (101 ; 700), de manière à établir les ressources de canal E-DCH commun.

2. Station « Node B » (102 ; 600) selon la revendication 1, dans laquelle chaque dite au moins une plage comprend deux valeurs représentant le début et la fin de la valeur d'identifiant E-RNTI pour les ressources de canal E-DCH commun.

3. Station «Node B» (102; 600) selon l'une quelconque des revendications précédentes, agencée de manière à envoyer ladite au moins une plage d'identifiant E-RNTI dans un message de partie d'application de station « Node B », NBAP.

4. Station «Node B» (102; 600) selon la revendication 3, agencée de manière à envoyer ladite au moins une plage d'identifiant E-RNTI dans un message de partie d'application NBAP sous la forme de nouveaux éléments d'information de protocole (IE).

5. Station «Node B» (102 ; 600) selon l'une quelconque des revendications précédentes, comprenant :
- un processeur (682) agencé de manière à configurer les ressources de canal E-DCH commun, y compris à déterminer ladite au moins une plage d'identifiant E-RNTI pour les ressources de canal E-DCH commun à utiliser ;
- une mémoire (683) agencée de manière à stocker des informations sur les plages d'identifiants E-RNTI déterminées pour les ressources de canal E-DCH commun à utiliser ; et
- un montage de circuits de communication (681) agencé de manière à envoyer ladite au moins une plage d'identifiant E-RNTI pour les ressources de canal E-DCH commun au contrôleur CRNC (101 ; 700).

6. Système destiné à établir des ressources de canal dédié amélioré, E-DCH, commun dans un réseau cellulaire, ledit système comprenant au moins une station d'émission-réception de base, «Node B », (102; 600), et au moins un contrôleur de réseau radio de commande, CRNC, (101 ; 700), dans lequel ladite au moins une station « Node B » (102 ; 600) est agencée de manière à configurer la ressource de canal E-DCH commun, y compris à déterminer au moins une plage d'identifiant de transaction de réseau radio de canal E-DCH, E-RNTI, pour les ressources de canal E-DCH commun à utiliser, et à envoyer ladite au moins une plage d'identifiant E-RNTI pour les ressources de canal E-DCH commun à son contrôleur CRNC (101 ; 700), de manière à établir les ressources de canal E-DCH commun.

7. Système selon la revendication 6, dans lequel chaque plage comprend deux valeurs représentant le début et la fin de la valeur d'identifiant E-RNTI pour les ressources de canal E-DCH commun.

8. Système selon l'une quelconque des revendications 6 à 7, agencé de manière à envoyer ladite au moins une plage d'identifiant E-RNTI dans un message de partie d'application de station « Node B », NBAP, sous la forme de nouveaux éléments d'information de protocole (IE).

9. Système selon l'une quelconque des revendications 6 à 8, dans lequel ladite au moins une station « Node B » (102 ; 600) comporte :
- un processeur (682) agencé de manière à configurer la ressource de canal E-DCH commun, y compris à déterminer ladite au moins une plage d'identifiant E-RNTI pour les ressources de canal E-DCH commun à utiliser ;
- une mémoire (683) agencée de manière à stocker des informations sur ladite au moins une plage d'identifiant E-RNTI déterminée pour les ressources de canal E-DCH commun à utiliser ; et
- un montage de circuits de communication (681) agencé de manière à envoyer ladite au moins une plage d'identifiant E-RNTI pour les ressources de canal E-DCH commun au contrôleur CRNC.

10. Système selon l'une quelconque des revendications 6 à 9, dans lequel ledit au moins un contrôleur CRNC (101 ; 700) est agencé de manière à recevoir la plage d'identifiant E-RNTI pour les ressources de canal E-DCH commun, fournie par la station « Node B » (101 ; 700), et à affecter l'identifiant E-RNTI au sein de ladite au moins une plage fournie par la station « Node B » (102 ; 600) pour les utilisateurs de canal E-DCH commun.

11. Système selon la revendication 10, dans lequel ledit au moins un contrôleur CRNC comporte un montage de circuits de communication (791) agencé de manière à recevoir ladite au moins une plage d'identifiant E-RNTI pour les ressources de canal E-DCH commun, fournie par la station « Node B », et un processeur (792) agencé de manière à affecter l'identifiant E-RNTI au sein de ladite au moins une plage pour les utilisateurs de canal E-DCH commun, fournie par la station « Node B ».

12. Système selon l'une quelconque des revendications 6 à 11, dans lequel le réseau cellulaire (100) est un réseau d'accès radio terrestre UMTS, UTRAN.

13. Procédé (200, 300), dans un réseau cellulaire, d'établissement de ressources de canal dédié amélioré, E-DCH, commun, comprenant la mise en oeuvre, au niveau d'une station « Node B », des étapes ci-dessous consistant à :
- configurer les ressources de canal E-DCH commun, y compris déterminer (205) au moins une plage d'identifiant de transaction de réseau radio de canal E-DCH, E-RNTI, pour les ressources de canal E-DCH commun à utiliser ; et
- envoyer (210) ladite au moins une plage d'identifiant E-RNTI pour les ressources de canal E-DCH commun à un contrôleur de réseau radio de commande, CRNC.

14. Procédé (200, 300) selon la revendication 13, dans lequel ladite au moins une plage comporte chacune parmi deux valeurs représentant le début et la fin de la valeur d'identifiant E-RNTI pour les ressources de canal E-DCH commun.

15. Procédé (200, 300) selon la revendication 13 ou 14, comprenant en outre la mise en oeuvre, au niveau du contrôleur CRNC, des étapes ci-dessous consistant à :
- recevoir (315) ladite au moins une plage d'identifiant E-RNTI pour les ressources de canal E-DCH commun, fournie par la station « Node B » ;
- affecter (320) l'identifiant E-RNTI au sein de ladite au moins une plage fournie par la station « Node B » pour les utilisateurs de canal E-DCH commun.

16. Contrôleur de réseau radio de commande, CRNC, (101 ; 700), agencé de manière à établir des ressources de canal dédié amélioré, E-DCH, commun dans un réseau cellulaire (100), dans lequel le contrôleur CRNC (101 ; 700) est agencé de manière à configurer les ressources de canal E-DCH commun, y compris à prédéterminer au moins une plage d'identifiant de transaction de réseau radio de canal E-DCH, E-RNTI, pour les ressources de canal E-DCH commun, et à informer une station d'émission-réception de base, «Node B », (102 ; 600), concernant ladite au moins une plage prédéterminée pour les ressources de canal E-DCH commun.

17. Procédé d'établissement de ressources de canal dédié amélioré, E-DCH, commun (400 ; 500) comprenant les étapes ci-dessous consistant à :
- configurer (425), au niveau d'un contrôleur de réseau radio de commande, CRNC, la ressource de canal E-DCH commun, ladite étape de configuration comprenant l'étape consistant à prédéterminer au moins une plage d'identifiant de transaction de réseau radio de canal E-DCH, E-RNTI, pour les ressources de canal E-DCH commun à utiliser ; et
- envoyer (430) ladite au moins une plage d'identifiant E-RNTI pour les ressources de canal E-DCH commun à une station d'émission-réception de base, « Node B ».

18. Procédé selon la revendication 17, comprenant en outre une étape consistant à recevoir (435, 440), au niveau du contrôleur CRNC, une réponse en provenance de la station «Node B » à ladite au moins une plage d'identifiant E-RNTI envoyée pour les ressources de canal E-DCH commun.

19. Procédé selon la revendication 18, dans lequel la réponse est un message de confirmation ou la réponse comporte une nouvelle plage proposée.

20. Procédé selon l'une quelconque des revendications 17 à 19, comprenant en outre une étape consistant à :
- recevoir (550), au niveau de la station « Node B », ladite au moins une plage d'identifiant E-RNTI prédéterminée pour les ressources de canal E-DCH commun, fournie par le contrôleur CRNC ; et
- évaluer (555), au niveau de la station « Node B », ladite au moins une plage prédéterminée reçue, et sur la base de l'étape d'évaluation, déterminer (557) ladite au moins une plage d'identifiant E-RNTI pour les ressources de canal E-DCH commun.
